Europäisches Patentamt

**European Patent Office**

Office européen des brevets

(11) Numéro de publication: **0 278 818**
**B1**

(12) **FASCICULE DE BREVET EUROPEEN**

(45) Date de publication du fascicule du brevet:
**27.06.90**

(51) Int. Cl.⁵: **B29C 67/18, B29C 35/08**

(21) Numéro de dépôt: **88400120.7**

(22) Date de dépôt: **20.01.88**

(54) Procédé et machine pour la plastification de documents.

(30) Priorité: **04.02.87 FR 8701330**

(43) Date de publication de la demande:
**17.08.88 Bulletin 88/33**

(45) Mention de la délivrance du brevet:
**27.06.90 Bulletin 90/26**

(84) Etats contractants désignés:
**CH DE ES FR GB IT LI**

(56) Documents cités:
**FR-A- 2 435 357**
**GB-A- 2 019 779**
**US-A- 4 338 152**
**US-A- 4 571 320**

**KAUTSCHUK + GUMMI KUNSTSTOFFE,**
**vol. 39, no. 5, mai 1986, pages 424-426, Heidelberg, DE;**
**I.J. CHABINSKY et al.: "Tire curing - microwave**
**preheating and alternatives - past, present and future"**

(73) Titulaire: **TECHNIQUES INDUSTRIELLES DE**
**PLASTIFICATION, 20, rue Louis-Braille, F-91420 Z.I.**
**Morangis(FR)**

(72) Inventeur: **Pineau, Alain, 27, Avenue des Peupliers,**
**F-91210 Draveil(FR)**

(74) Mandataire: **Tony-Durand, Serge, Cabinet**
**Tony-Durand 77, rue Boissière, F-75116 Paris(FR)**

## Description

La présente invention est relative à la plastification de documents constitués par des supports plats, pré-imprimés ou non, du genre cartes d'identités, cartes de crédit, permis de conduire, etc., notamment par mise en place de chacun de ces supports entre deux feuilles ou films minces d'un matériau plastique et thermofusion des parties correspondantes de ceux-ci in situ par un apport de chaleur approprié alors que l'ensemble est pressé entre les deux plateaux d'une presse, -ce traitement étant suivi d'un refroidissement contrôlé toujours entre les deux plateaux d'une presse pour assurer la stabilisation de la matière plastique.

Dans les machines actuellement utilisées, le chauffage des films en matière plastique est assuré par l'intermédiaire des plateaux de la presse, ce qui impose de munir ceux-ci de moyens de chauffage appropriés, par exemple des résistances électriques incorporées dans ces plateaux. Cependant ceci ne permet pas d'avoir une répartition de la chaleur parfaitement homogène au sein des feuilles de matériau plastique disposées autour du support, en raison de la mauvaise conductibilité thermique du matériau qui les constituent.

Par ailleurs, il est également nécessaire de prévoir, dans ces mêmes plateaux de la presse de traitement, des moyens de refroidissement par apport de frigories provenant d'un circuit annexe, et ce de façon à réaliser ensuite le traitement de stabilisation de films en matière plastique. Comme on accompagne aisément la succession des phases de chauffage, puis de refroidissement des plateaux de la presse de traitement à une solution présentant de nombreux inconvénients, ceci a pour conséquence que la durée totale d'une opération de plastification est extrêmement longue puisqu'il est nécessaire que les plateaux de la presse se refroidissent suffisamment après avoir été portés à la température voulue pour assurer la thermo-fusion des films en matière plastique. En second lieu, cette solution a pour inconvénient d'appliquer une structure très complexe des plateaux de la presse puisque ceux-ci doivent accompagner à la fois des moyens de chauffage et des moyens de refroidissement. Par ailleurs, la succession des phases de chauffage et de refroidissement a pour inconvénient d'entraîner la déformation rapide des plateaux, et par suite une très mauvaise qualité d'exécution de l'état des surfaces des documents plastifiés ainsi obtenus.

Pour remédier à ces inconvénients, il a déjà été proposé d'utiliser deux presses distinctes de traitement, l'une pour l'opération de thermo-fusion et l'autre pour l'opération de stabilisation. Cependant ceci ne limite pas les inconvénients mentionnés ci-dessus. Toutefois ceci aboutit à l'emploi des machines encore plus complexes et coûteuses comportant des moyens de transfert d'une presse à l'autre. Par ailleurs, certains des inconvénients exposés précédemment subsistent intégralement, notamment la mauvaise répartition de la chaleur à l'intérieur des feuilles en matière plastique du fait que leur chauffage est assuré indirectement par l'intermédiaire des plateaux de la première presse de traitement et également en raison de la mauvaise conductibilité thermique du matériau de ces feuilles.

C'est pourquoi la présente invention a pour objet un procédé et une machine qui sont conçus de façon à assurer la thermo-fusion des films en matière plastique par un moyen autre qu'un chauffage indirect par l'intermédiaire des plateaux d'une presse de traitement, en l'occurrence par un moyen non utilisé jusqu'ici pour des applications de ce genre.

A ce sujet il convient de noter que dans le but d'assurer la vulcanisation d'une bande en caoutchouc, il a déjà été proposé de faire passer celle-ci dans une enceinte de traitement à l'intérieur de laquelle elle est soumise à l'action d'une émission de micro-ondes. Un tel mode de traitement a notamment été décrit dans le document intitulé KAUTSCHUK + GUMMI KUNSTSTOFFE, vol. 39, no. 5, mai 1986, pages 424-426, Heidelberg, DE; I. J. CHABINSKY : "Tire curing - microwave preheating and alternatives - past, present and future", page 424 et 425. Mais il s'agit là d'un mode de traitement n'ayant absolument aucun rapport avec l'objet de la présente demande. En effet il ne s'agit en aucune façon de solidariser une couche de matière plastique avec un support en papier ou autre et de donner à cette couche un état de surface glacé, le tout grâce à une fusion thermique s'accompagnant d'un pressage au moyen d'un plateau de presse ou similaire.

Quant à la présente invention, elle a pour premier objet un procédé de plastification de documents à partir d'au moins une feuille ou un film mince en matière thermoplastique placé contre ces documents, en réalisant deux opérations successives distinctes entre les deux plateaux d'une presse, à savoir : une première opération de fusion de la partie du ou des films située contre un document à plastifier, puis une seconde opération de stabilisation de l'ensemble par refroidissement, caractérisé en ce que l'on effectue la fusion du ou des films en matière plastique en provoquant une agitation moléculaire de cette matière par l'action d'une émission d'ondes hyper-fréquences au moyen d'un générateur de telles ondes que l'on associe à la presse entre les plateaux de laquelle est disposé le document à plastifier puis on effectue la seconde opération de stabilisation en errêtant simplement le fonctionnement de ce générateur, ce qui entraine le refroidissement immédiat de la matière plastique qui est ainsi amenée à se stabiliser entre les deux plateaux de la presse.

Grâce au fait que l'achèvement des films en matière plastique est assuré par une agitation moléculaire de cette matière elle-même, sous l'action directe d'une émission d'ondes hyper-fréquences, on obtient un chauffage parfaitement uniforme au sein même du matériau, donc un travail de plastification beaucoup plus satisfaisant. Par ailleurs, cette solution a également l'avantage de permettre un refroidissement très rapide des films en matière plastique et d'éviter d'avoir à refroidir les plateaux de la presse de traitement puisque ceux-ci n'ont pas été eux-mêmes achevés lors de l'achèvement interne des films en matière plastique. Il en résulte donc un gain de temps extrêmement important ainsi qu'une simplification considérable du matériel susceptible d'être employé pour la mise en oeuvre du présent procédé. Du reste ce procédé permet de réaliser une machine de plastification. beaucoup plus simple, d'un encombrement beaucoup plus réduit que celle actuellement disponible dans le commerce, et présentant surtout un prix de revient moins élevé, ce qui autorise ses utilisations sur le lieu même d'établissement d'un document devant être plastifié et notamment dans les Administrations habilitées à délivrer des documents officiels ou non. En conséquence ces Administrations non plus à recourir à une sous-traitance extérieure pour réaliser la plastification de tels documents, ce qui évite les risques de vol ou de falsification.

Du reste la présente invention a également pour objet une machine spécialement conçue pour la mise en oeuvre du procédé défini précédemment.

A cet effet, la machine considérée, comportant un distributeur en continu pour un support pré-imprimé ou non, disposé entre deux feuilles ou films minces en plastique recouvrant ce support sur chacune de ses faces, des moyens pour provoquer l'avance du complexe constitué par le support et les films entre les plateaux d'une première presse hydraulique et des moyens de récupération du support plastifié à la sortie de la machine, se caractérise en ce que la presse hydraulique est associée à un générateur d'ondes hyperfréquences créant au sein même du complexe à plastifier une agitation moléculaire provoquant l'échauffement contrôlé du matériau plastique des films et la plastification du support, la coupure du générateur assurant un refroidissement immédiat du complexe ainsi plastifié.

De préférence, la machine selon l'invention comporte, en aval de la première presse hydraulique dans le sens d'avance du complexe, une seconde presse hydraulique munie d'un outil de prédécoupe interchangeable du complexe plastifié, les moyens de récupération du complexe étant disposés en aval, au delà de cette seconde presse dans le sens de l'avance du complexe dans la machine. Eventuellement, la machine comporte également, avant ou après la seconde presse hydraulique, un outil complémentaire permettant d'imprimer ou d'estamper le complexe après plastification.

De préférence, les moyens de récupération du complexe plastifié sont constitués par un bras pivotant, muni en bout d'une ventouse d'aspiration des complexes pré-découpés, ceu-ci étant restitués après pivotement du bras dans un bac de réception porté par la machine. Avantageusement, le reliquat des films plastiques prédécoupés, une fois le complexe plastifié retiré et récupéré, est renvoyé dans un second bac de réception, disposé à la sortie de la machine.

Selon une caractéristique particulière de la machine considérée, la première presse hydraulique présente un cycle de fonctionnement en deux étapes, dont l'une à pression plus réduite, évite la déformation des films plastiques au cours de la thermofusion par ondes d'hyperfréquences et la seconde, à pression plus élevée, permet de stabiliser les films plastiques et d'améliorer l'état de surface du support plastifié, après coupure du générateur pendant le refroidissement du complexe.

Selon une autre caractéristique également, les moyens d'avance du complexe à plastifier sont constitués par au moins un jeu de pinces à va et vient alterné, monté à proximité de la première presse hydraulique. De préférence, des cellules photo-électriques de repérage, d'avance et d'arrêt du complexe sont prévus pour contrôler le mouvement de ces moyens d'avance.

Enfin les organes de la machine sont avantageusement montés à l'intérieur d'une carter en partie transparent, permettant de surveiller en permanence la mise en oeuvre des opérations lors du fonctionnement de la machine et notamment l'avance du complexe à plastifier ainsi que les mouvements des presses hydrauliques.

D'autres développements avantageux d'une machine de plastification de documents établie conformément à l'invention apparaîtront encore à travers la description qui suit d'un exemple de réalisation, donné à titre indicatif et non limitatif, en référence aux dessins annexés sur lesquels :

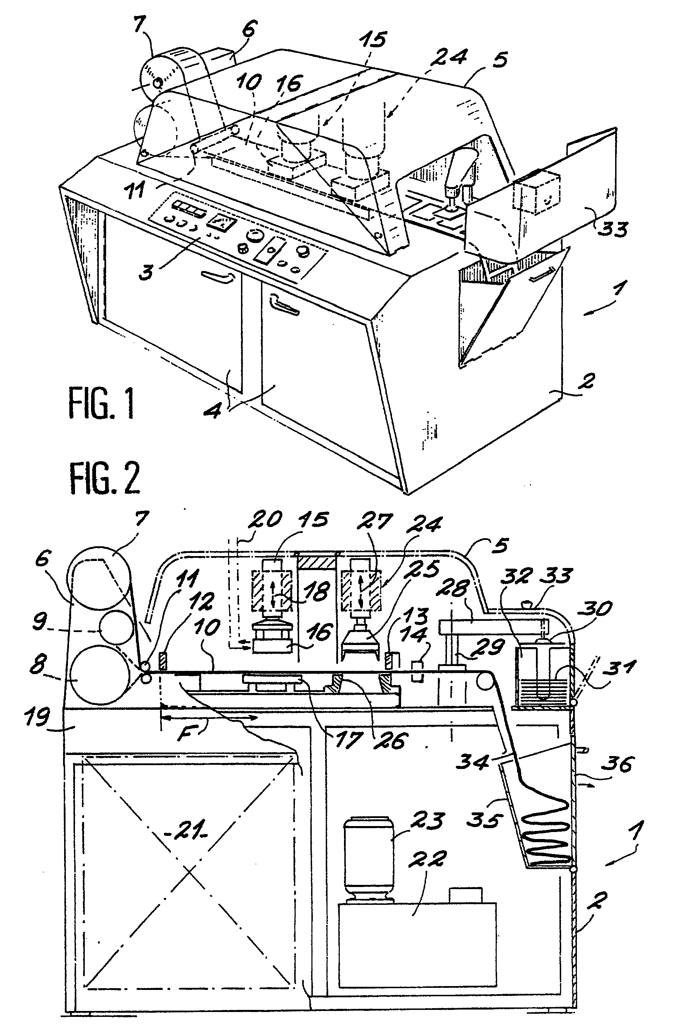

- La Figure 1 est une vue schématique en perspective de la machine considérée.

- Les Figures 2 et 3 sont respectivement des vues en coupe longitudinale et de dessus de la machine illustrée sur la Figure 1.

La machine à plastifier des documents selon l'invention est désignée dans son ensemble sur ces dessins sous la référence 1. Elle se compose principalement d'un carter inférieur 2, muni sur l'un de ses côtés d'un tableau 3 de commande des différents organes mécaniques et électriques qu'elle comporte. Sous le tableau 3 sont prévues des portes amovibles 4, permettant d'accéder aux parties de la machine situées à l'intérieur du carter 2, notamment pour entretien ou réparation. A sa partie supérieure, le carter 2 est surmonté par un capot 5, de préférence en matière translucicde, permettant à un opérateur se servant de la machine de contrôler son bon fonctionnement et d'intervenir le cas échéant sur le tableau de commande 3 pour assurer la mise en marche ou l'arrêt du processus mis en oeuvre.

Sur le côté gauche du carter 2 est prévu un support 6 pour divers rouleaux permettant d'alimenter la machine avec d'une part le support à plastifier, pré-imprimé. ou non, et d'autre part avec deux films plastiques, destinés, à s'appliquer dessus et dessous ce support, en constituant avec celui-ci un complexe qu'il convient de traiter dans la machine.

Le support 6 porte ainsi deux rouleaux à axes parallèles respectivement 7 et 8, pour le déroulement des films plastiques et un rouleau intermédiaire 9, sur lequel le support à plastifier est préalablement enroulé, le complexe 10 formé par ce support entre ses deux films étant ainsi déroulé en continu et guidé à l'entrée de la machine par un rouleau d'appui transversal 11. Bien entendu, on pourrait envisager dans d'autres variantes, d'utiliser un support intermédiaire, non pas enroulé sur lui-même mais, du fait de sa rigidité propre, se présentant sous la forme d'une élément plat, se déplaçant parallèlement à son plan et recouvert de la même façon à l'entrée dans la machine, sur l'une et l'autre de ses faces, par les films plastiques provenant des rouleaux 7 et 8.

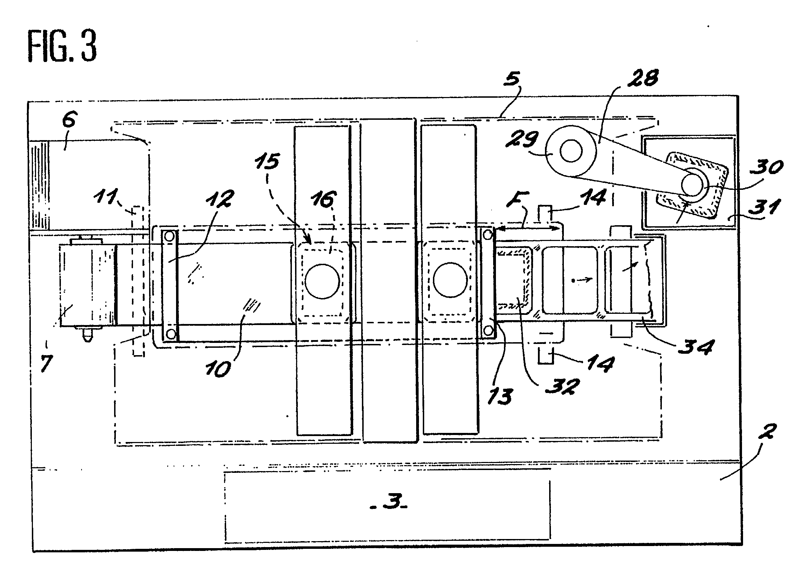

Le complexe 10 ainsi obtenu est déplacé dans la machine au moyen d'un ensemble de deux pinces à mouvements alternatifs, respectivement 12 et 13 qui, par des déplacements de va et vient appropriés selon le sens de la double flèche F (Fig. 2 et 3), réalisent une alimentation continue du complexe dans la machine. Le mode de réalisation particulier des pinces 12 et 13 est en lui-même indifférent aux caractéristiques de l'invention et peut notamment être réalisé au moyen de tout mécanisme classique dans lequel, pendant que l'une des pinces saisit le complexe 10 et le déplace dans le sens prévu soit ici de la gauche vers la droite, sur une certaine distance, l'autre pince est ouverte et revient en arrière pour saisir à son tour une nouvelle longueur du complexe et déterminer son déplacement après la fin de la course de la première pince. Un ensemble de cellules photoélectriques 14, permet de contrôler les mouvements des pinces 12 et 13 et l'avance convenable du complexe 10.

Conformément à l'invention, la machine 1 comporte une première presse hydraulique 15, munie d'un plateau 16 destiné à coopérer avec un contre-plateau 17, placé du côté opposé du complexe 10 par rapport à ce plateau 16.

Celui-ci est animé d'un mouvement alternatif de va et vient vertical selon le sens de la flèche 18, de telle sorte qu'il permette un serrage du complexe 10 entre le plateau 16 et le contre-plateau 17 de préférence selon deux phases successives de préserrage puis de serrage évitant la déformation des films puis facilitant leur stabilisation, ou au contraire, lorsque ce plateau 16 est relevé, le libre déplacement du complexe 10 sous l'action des pinces 12 et 13.

Pour assurer l'élévation de température nécessaire dans les films plastiques, le plateau 16 de la presse hydraulique 15 est associé, selon l'invention, à un générateur d'ondes hyperfréquences, schématisé en 19 sur la Figure 2. Ce générateur est d'un type en lui-même connu, pour l'équipement des fours électroménagers à micro-ondes. L'émission d'ondes hyperfréquences sur les feuilles en matière plastique, alors que celles-ci sont pressées de part et d'autre d'un document à plastifier, a pour effet de créer au sein du matériau de ces feuilles une agitation moléculaire assurant l'élévation de température nécessaire pour la fusion de la matière plastique et la réalisation de l'opération de plastification.

Notamment grâce à l'échauffement produit dans la matière plastique, combiné à l'effet de serrage du complexe entre les plateaux 16 et 17, se réalise la plastification parfaite du support, la phase de chauffage étant suivie par une étape de refroidissement contrôlé. Grâce au procédé selon l'invention, celle-ci peut être obtenue immédiatement après l'opération de plastification proprement dite, et ce dès la mise hors tension du générateur hyperfréquence 19. En effet ceci est possible dans le cas présent du fait que les plateaux de la presse n'ont pas été chauffés, de sorte qu'il n'y a pas à les refroidir au préalable.

Eventuellement, le plateau 16 de la presse 15 peut comporter un circuit de refroidissement autonome 20, permettant de compléter l'apport des frigories nécessaire au refroidissement du complexe réalisé.

En outre, sur le schéma de la Figure 2, on a représenté, monté à l'intérieur du carter un ensemble de ventilation 21, ainsi que le groupe de commande hydraulique 22 avec son compresseur 23, permettant la commande du mouvement d'abaissement et d'élévation du plateau de serrage 16.

La machine 1 comporte également, disposée en aval de la première presse hydraulique 15 par rapport au sens de déplacement du complexe 10, une seconde presse 24, munie d'une emporte-pièce 25 interchangeable, propre à coopérer avec enclume 26 disposée sous le complexe 10, les mouvements verticaux de va et vient de l'emporte-pièce 25 selon le sens de la flèche 27, permettant ainsi à ce dernier de pré-découper dans le complexe plastifié 10 à la sortie de la première presse hydraulique 15, le contour des supports en vue de leur récupération ultérieure en sortie de machine.

A cet effet, la machine 1 comporte un bras pivotant 28, monté sur le côté du carter 2 autour d'une colonne verticale 29 et comprenant à son extrêmité opposée une ventouse 30, propre à venir séparer les supports plastifiés, vis-à-vis du reste du complexe 10, ainsi pré-découpés par la seconde presse 24. Les supports plastifiés 31 sont alors empilés, consécutivement à la rotation du bras 28, dans un réceptacle 32, fermé par une paroi 33 elle-même montée basculante vers l'extérieur afin de permettre la récupération de la pile de ces supports. Le reliquat 34 du complexe 10 poursuit son déplacement et est récupéré dans un bac inférieur 35, également muni d'une porte d'accès basculante 36.

On réalise ainsi une machine à plastifier les documents, de conception très simple et dont l'encombrement et le prix de revient peuvent être suffisamment réduits pour autoriser aisément son utilisation aux lieux mêmes où se réalisent les documents à plastifier. En particulier, dans le cas d'Administrations délivrant des documents officiels, une telle machine permet d'éviter les risques de falsification ou de vol, tout en permettant de satisfaire les demandeurs grâce à une délivrance extrêmement rapide des documents souhaités.

Bien entendu, il va de soi que l'invention ne se limite pas à l'exemple de réalisation plus spécialement décrit et représenté ; elle en embrasse au contraire toutes les variantes. En particulier, le générateur à haute fréquence pourrait être réalisé de toute manière classique et connue dans la technique pour concentrer les ondes à haute fréquence produites dans le complexe à plastifier et exclusivement au sein de celui-ci. De même, on pourrait prévoir de monter dans la machine d'autres postes de travail pour réaliser sur les supports, avant et après plastification, l'incorporation d'éléments complémentaires (photos d'indentité, circuits intégrés électroniques ...) ou pour estamper ou imprimer ces supports.

## Revendications

1. Procédé de plastification de documents à partir d'au moins une feuille ou un film mince en matière thermoplastique placé contre ces documents, en réalisant deux opérations successives distinctes entre les deux plateaux d'une presse, à savoir : une première opération de fusion de la partie du ou des films située contre un document à plastifier, puis une seconde opération de stabilisation de l'ensemble par refroidissement, caractérisé en ce que l'on effectue la fusion du ou des films en matière plastique en provoquant une agitation moléculaire de cette matière par l'action d'une émision d'ondes hyperfréquences au moyens d'une générateur (19) de telles ondes que l'on associe à la presse (15) entre les plateaux le laquelle est disposé le document à plastifier puis on effectue la seconde opération de stabilisation en arrêtant simplement le fonctionnement de ce générateur (19), ce qui entraîne le refroidissement immédiat de la matière plastique qui est ainsi amenée à se stabiliser entre les deux plateaux de la presse (15).

2. Procédé de plastification selon la revendication 1, caractérisé en ce que pendant la première opération de fusion du ou des films en matière plastique on exerce, au moyen des plateaux de la presse (15), une pression limitée de façon à éviter la déformation du ou des films en matière plastique au cours de la thermofusion par l'effet des ondes hyperfréquences, puis après coupure du générateur (9) de ces ondes, on exerce une pression plus élevée, pendant la seconde opération de refroidissement, ce qui permet de stabiliser la partie correspondante du ou des films en matière plastique et d'améliorer l'état de surface de l'ensemble.

3. Machine à plastifier pour la mise en oeuvre du procédé selon la revendication 1, comportant un distributeur en continu pour un support pré-imprimé ou non, disposé entre deux feuilles ou films minces en plastique recouvrant ce support sur chacune de ses faces, des moyens (12-13) pour provoquer l'avance du complexe constitué par le support et les films entre les plateaux (16-17) d'une presse de traitement (15), caractérisée en ce qu'à la presse de traitement (15), il est associé un générateur (19) d'ondes hyperfréquences, apte à créer, au sein même du complexe à plastifier, une agitation moléculaire provoquant l'échauffement contrôlé du matériau plastique des films et la plastification du support, la coupure du générateur assurant un refroidissement immédiat du complexe ainsi plastifié.

4. Machine à plastifier selon la revendication 3, caractérisée en ce qu'elle comporte, en aval de la première presse hydraulique (15) dans le sens d'avance du complexe (10), une seconde presse hydraulique (24) munie d'un outil de pré-découpe (25) interchageable du complexe plastifié, les moyens de récupération du complexe (28-32) étant disposés en aval, au-delà de cette seconde presse dans le sens de l'avance du complexe dans la machine.

5. Machine à plastifier selon l'une des revendications 3 ou 4, caractérisée en ce qu'elle comporte également, avant ou après la seconde presse hydraulique (24), un outil complémentaire permettant d'imprimer ou d'estamper le complexe après plastification.

6. Machine à plastifier selon l'une quelconque des revendications 3 à 5, caractérisée en ce que les moyens de récupération du complexe plastifié sont constitués par un bras pivotant (28), muni en bout d'une ventouse d'aspiration (30) des complexes 10 pré-découpés, ceux-ci étant restitués après pivotement du bras dans un bac de réception (32) porté par la machine.

7. Machine à plastifier selon la revendication 6, caractérisée en ce que le reliquat (34) des films plastiques, une fois le complexe (10) plastifié, retiré et récupéré, est renvoyé dans un second bac de réception (35), disposé à la sortie de la machine.

8. Machine à plastifier selon l'une quelconque des revendications 3 à 7, caractérisée en ce que la première presse hydraulique (15) présente un cycle de fonctionnement en deux étapes, dont l'une à pression plus réduite, évite la déformation des films plastiques au cours de la thermofusion par ondes hyperfréquences et la seconde, à pression plus élevée, permet de stabiliser les films plastiques et d'améliorer l'état de surface du support plastifié, après coupure du générateur (19) pendant le refroidissement du complexe (10).

9. Machine à plastifier selon la revendication 3, caractérisée en ce que les moyens d'avance du complexe à plastifier sont constitués par au moins un jeu de pinces (12-13) à va et vient alterné, monté à proximité de la première presse hydraulique (15).

10. Machine à plastifier selon la revendication 9, caractérisée en ce que des cellules photo-électriques de repérage, d'avance et d'arrêt du complexe sont prévus pour contrôler le mouvement de ces moyens d'avance (12-13).

**Patentansprüche**

1. Verfahren zum Einschweißen von Dokumenten, ausgehend von einem Blatt oder einem dünnen Film aus thermoplastischem Material, welches relativ zu den Dokumenten angeordnet wird, indem zwei aufeinanderfolgende Verfahrensschritte zwischen den beiden Platten einer Presse durchgeführt werden, nämlich ein erster Verfahrensschritt des Schmelzens des Teils des Films oder der Filme, der an dem einzuschweißenden Dokument anliegt, und dann ein zweiter Verfahrensschritt des Stabilisierens der Gesamtheit durch Abkühlen, dadurch gekennzeichnet, daß das Schmelzen des oder der Filme aus thermoplastischem Material durch Molekularbewegung dieses Materials unter Einwirkung von ultrahochfrequenten Wellen eines Generators (19) für solche Wellen erfolgt, der mit der Presse (15) verbunden ist, zwischen deren Platten das einzuschweißende Dokument angeordnet ist, und daß dann das Stabilisieren durch das Abschalten dieses Generators (19) erfolgt, so daß die sofortige Abkühlung des thermoplastischen Materials, welches somit zwischen den beiden Platten der Presse (15) zur Stabilisation geführt ist, die Folge ist.

2. Verfahren nach Anspruch 1, dadurch gekennzeichnet, daß während des ersten Verfahrensschritts des Schmelzens des oder der Filme aus thermoplastischem Material mittels der Platten der Presse (15) ein entsprechend begrenzter Druck aufgebracht wird, um die Verformung des oder der Filme aus thermoplastischem Material während der Thermoschmelze mittels der ultrahochfrequenten Wellen zu vermeiden, und daß dann nach dem Abschalten des Generators (19) dieser Wellen ein höherer Druck während des Verfahrensschritts der Abkühlung aufgebracht wird, der die Stabilisierung des entsprechenden Teils des oder der Filme aus thermoplastischem Material und die Verbesserung der Oberflächenbeschaffenheit der Gesamtheit gestattet.

3. Maschine zum Plastifizieren nach dem Verfahren des Anspruchs 1, mit einer kontinuierlichen Eingabeeinrichtung für einen vorbedruckten oder nicht-vorbedruckten Träger, der zwischen zwei Blättern oder dünnen Filmen aus thermoplastischem Material angeordnet ist, die den Träger beidseitig abdecken, mit Fördermitteln (12, 13) zum Führen der Gesamtheit aus dem Träger und den Filmen zwischen die Platten (16, 17) einer Behandlungspresse (15), dadurch gekennzeichnet, daß die Behandlungspresse (15) mit einem Generator (19) für ultrahochfrequente Wellen verbunden ist, der geeignet ist, im Innern der zu plastifizierenden Gesamtheit eine Molekularbewegung hervorzurufen, die sich in einer gezielten Erwärmung des thermoplastischen Materials der Filme und der Plastifizierung des Trägers äußert, und daß das Abschalten des Generators eine sofortige Abkühlung der so plastifizierten Gesamtheit nach sich zieht.

4. Maschine zum Plastifizieren nach Anspruch 3, dadurch gekennzeichnet, daß in Förderrichtung der Gesamtheit (10) nach der ersten hydraulischen Presse (15) eine zweite hydraulische Presse (24) vorgesehen ist, die mit einem auswechselbaren Vor-Schneidewerkzeug (25) für die plastifizierte Gesamtheit ausgestattet ist, und daß Entnahmemittel für die Gesamtheit (28 bis 32) der zweiten Presse in Förderrichtung nachgeschaltet vorgesehen sind.

5. Maschine zum Plastifizieren nach einem der Ansprüche 3 oder 4, dadurch gekennzeichnet, daß sie vor oder nach der zweiten hydraulischen Presse (24) ein entsprechendes Werkzeug zum Bedrucken oder Stempeln der Gesamtheit nach der Plastifizierung aufweist.

6. Maschine zum Plastifizieren nach einem der Ansprüche 3 bis 5, dadurch gekennzeichnet, daß die Entnahmemittel für die plastifizierte Gesamtheit einen Schwenkarm (28) aufweisen, der vorn einen Sauger (30) für die vorgeschnittenen Gesamtheiten (10) trägt, die nach dem Schwenken des Schwenkarms in einen Aufnahmekasten (32) an der Maschine abgelegt werden.

7. Maschine zum Plastifizieren nach Anspruch 6, dadurch gekennzeichnet, daß der Abfall (34) der Filme aus thermoplastischem Material, nach dem die plastifizierte Gesamtheit weggenommen und wiedergewonnen ist, in einen zweiten Aufnahmekasten (35) am Ausgang der Maschine abgelegt wird.

8. Maschine zum Plastifizieren der einem der Ansprüche 1 bis 7, dadurch gekennzeichnet, daß die erste hydraulische Presse (15) einen zweistufigen Betätigungszyklus aufweist, wobei im ersten Teil mit reduziertem Druck eine Deformation der plastifizierten Filme während der Thermoschmelze durch die ultrahochfrequenten Wellen vermieden wird, und im zweiten Teil mit erhöhtem Druck eine Stabilisierung der Filme aus thermoplastischem Material und eine Verbesserung der Oberflächenbeschaffenheit des plastifizierten Trägers erreicht werden, und zwar nach dem Abschalten des Generators (19) während des Abkühlens der Gesamtheit (10).

9. Maschine zum Plastifizieren nach Anspruch 3, dadurch gekennzeichnet, daß die Fördermittel für die zu plastifizierende Gesamtheit mindestens ein hin- und hergehendes Zangenpaar (12, 13) aufweisen, die in der Nähe der ersten hydraulischen Presse (15) angeordnet sind.

10. Maschine zum Plastifizieren nach Anspruch 9, dadurch gekennzeichnet, daß Fotozellen zum Feststellen des schrittweisen Förderns der Gesamtheit vorgesehen sind, um die Bewegung der Fördermittel (12, 13) zu steuern.

## Claims

1. Process for plastic coating of documents starting from at least one sheet or thin film of thermoplastic material placed against said documents, by carrying out two distinct successive operations between the two plates of a press, namely a first operation of fusion of that part of the film or films which is located against a document to be coated with plastic, then a second operation of stabilization of the assembly by cooling, characterized in that fusion of the plastic film or films is carried out by producing molecular agitation of this plastic material by the action of a microwave emission by means of a microwave generator (19) which is associated with the press (15), the document to be coated with plastic being placed between the plates of said press, the second stabilization operation being then carried simply by stopping the operation of said generator (19), which results in immediate cooling of the plastic which is thus caused to stabilize between the two plates of the press (15).

2. Plastic coating process in accordance with claim 1, characterized in that, during the first operation of fusion of the plastic film or films, a limited pressure is exerted by means of the plates of the press (15) so as to avoid deformation of the plastic film or films during thermofusion under the action of the microwaves whereupon, after the microwave generator (9) has been switched-off, a higher pressure is exerted during the second cooling operation, thus making it possible to stabilize the corresponding portion of the plastic film or films and to improve the state of surface of the entire assembly.

3. Plastic coating machine for carrying out the process in accordance with claim 1, comprising a continuous distributor for a supporting medium which may or may not be preprinted, placed between two sheets or thin films of plastic which cover said supporting medium on each of its faces, means (12–13) for feeding the complex constituted by the supporting medium and the films between the plates (16–17) of a treatment press (15), characterized in that there is associated with the treatment press (15) a microwave generator (19) which is capable of producing within the complex to be coated with plastic a molecular agitation which results in controlled heating of the plastic material of the films and in plastic coating of the supporting medium, immediate cooling of the complex thus coated being ensured by switching-off the generator.

4. Plastic coating machine in accordance with claim 3, characterized in that it comprises, downstream of the first hydraulic press (15) in the direction of feed motion of the complex (10), a second hydraulic press (24) provided with an interchangeable pre-cutting tool (25) for the plastic-coated complex, the means for recovering the complex (28–32) being placed downstream, beyond said second press in the direction of feed motion of the complex within the machine.

5. Plastic coating machine in accordance with either claim 3 or claim 4, characterized in that it also comprises, before or after the second hydraulic press (24), a complementary tool for printing or stamping the complex after plastic coating.

6. Plastic coating machine in accordance with any one of claims 3 to 5, characterized in that the means for recovering the plastic-coated complex are constituted by a pivoting arm (28) provided at the end with a suction cup (30) for the pre-cut complexes 10, these latter being returned after pivotal displacement of the arm into a receiving tank (32) carried by the machine.

7. Plastic coating machine in accordance with claim 6, characterized in that, once the complex (10) has been plastic-coated, withdrawn and recovered, the remainder (34) of the plastic films is returned into a second receiving tank (35) placed at the exit of the machine.

8. Plastic coating machine in accordance with any one of claims 3 to 7, characterized in that the first hydraulic press (15) has an operating cycle in two stages, one of which at lower pressure avoids deformation of the plastic films during thermofusion by microwaves and the second at higher pressure makes it possible to stabilize the plastic films and to improve the state of surface of the plastic-coated supporting medium after switching-off the generator (19) during cooling of the complex (10).

9. Plastic coating machine in accordance with claim 3, characterized in that the means for feeding the complex to be coated with plastic are constituted by at least one set of clamps (12–13) in reciprocating motion, mounted in proximity to the first hydraulic press (15).

10. Plastic coating machine in accordance with claim 9, characterized in that photoelectric cells for locating, feeding and stopping the complex are provided for controlling the movement of said feeding means (12–13).

FIG. 1

FIG. 2

# FIG. 3

EP 0 278 818 B1